Europäisches Patentamt

European Patent Office

Office européen des brevets

(11) Publication number: **0 171 924**
**A2**

# EUROPEAN PATENT APPLICATION

(21) Application number: **85304945.0**

(22) Date of filing: **11.07.85**

(51) Int. Cl.⁴: **H 04 J 15/00**
**H 04 B 9/00**

(30) Priority: **14.08.84 GB 8420590**

(43) Date of publication of application:
**19.02.86 Bulletin 86/8**

(84) Designated Contracting States:
**AT BE CH DE FR IT LI LU NL SE**

(71) Applicant: STANDARD TELEPHONES AND CABLES
PUBLIC LIMITED COMPANY
190 Strand
London, WC2R 1DU(GB)

(72) Inventor: Davies, David Evan Naunton
Felden Thatch Sheethanger Lane Felden
Hertfordshire HP3 0BG(GB)

(74) Representative: Capsey, Sydney Ross
Standard Telephones and Cables Patent Department
Edinburgh Way
Harlow Essex CM20 2SH(GB)

(54) **Radio frequency multiplexing filter using fibre optic delays.**

(57) A radio frequency multiplexing filter comprises a matrix network of individual fibre optic delays 5 connecting each of a number of input ports $3_{-2}...3_2$ to each of a number of output ports $4_{-2}...4_2$, the input ports all being coupled to a comon source of radio frequency modulated optical signals 1 via incremental time delays, the time delays being implemented by fibre optic delay means connected to a single modulated light source 2, said fibre optic delay means being adapted to provide substantially equal amplitude optical signals to each of the input ports but with incremental time delays between said optical signals applied to said ports.

RADIO FREQUENCY MULTIPLEXING FILTER USING
FIBRE OPTIC DELAYS

This invention relates to a radio frequency multiplexing filter using fibre optic delay elements.

An r.f. multiplexing filter can be described functionally as an apparatus which can take a broadband input signal and sub-divide it down into a number of narrow band output channels.

The use of single mode and multi-mode fibre optic delay lines for r.f. signal processing is known. In "Opto-Electronics - A New Dimension In Electronics", the Presidential Address of the present inventor given to the Annual General Meeting of the Institute of Electronic and Radio Engineers in London, 27 October 1983, and subsequently published in the Radio and Electronic Engineer, Vol. 54, No. 1, Jan. 1984, pp 1-9, there is disclosed the use of lengths of multi-mode fibre optic line to provide time delay networks for the simultaneous formation of multiple beams in a so-called beam forming matrix. The matrix as disclosed has a number of input ports each connected to each one of a number of output ports by means of individual fibre optic lines. Each input port is fed from a separate r.f. modulated light source and each output port feeds a separate photodetector. Such an arrangement would be used for radio direction finding and as a radar receiving system. Optical fibre technology is particularly appropriate to this type of application where the combination of time delays (corresponding to tens of nanoseconds) and bandwidths (running to hundreds of Mega Hertz) is quite within their capability at low cost and low dispersion. Such equipments appear to be potentially cheaper than microwave equivalents and offer more attractive time bandwidth products (compared with intermediate frequency and digital technology) for wide band systems.

According to the present invention there is provided a radio frequency multiplexing filter comprising a matrix network of individual fibre optic delays connecting each of a number of input ports to each of a number of output ports, the input ports all being coupled to a common source of radio frequency modulated optical signals via incremental time delays, characterised in that said time delays are implemented by fibre optic delay means connected to a single modulated light source, said fibre optic delay means being adapted to provide substantially equal amplitude optical signals to each of the input ports but with incremental time delays between said optical signals applied to said ports.

In one embodiment of the invention said fibre optic delay means comprises a plurality of individual fibre optic delay lines of different lengths each coupled at one end to the electro-optic modulator and each connected at the other end to a respective one of the input ports.

In an alternative embodiment of the invention said fibre optic delay means comprises a fibre optic tapped delay line.

Embodiments of the invention will now be described with reference to the accompanying drawings, wherein:-

Fig. 1 illustrates a 5-channel radio frequency multiplexing filter,

Figs. 2a and 2b illustrate frequency response characteristics of the filter shown in Fig. 1, and

Fig. 3 illustrates an alternative implementation to the filter shown in Fig. 1.

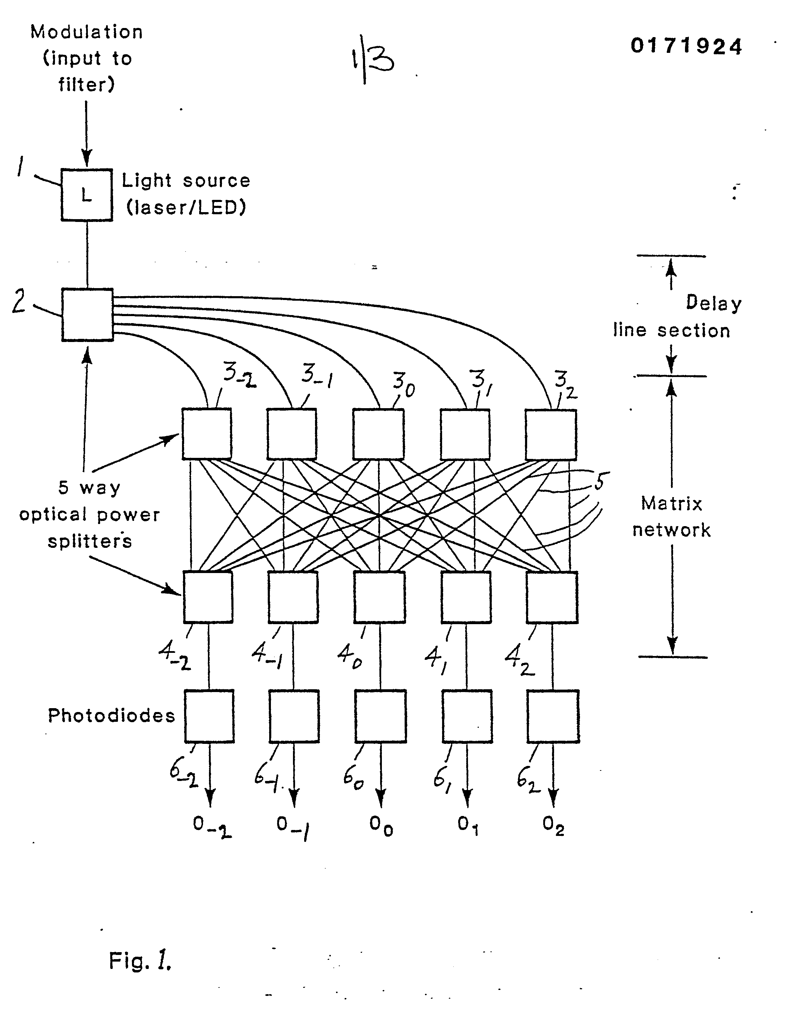

In the arrangement shown in Fig. 1 an r.f. signal input is used to modulate a laser or light emitting diode (LED) 1 to provide a modulated optical signal. The optical signal is fed into a 5-way optical power splitter 2 from which 5 different lengths of optical fibre each take a proportion of the optical signal to a respective one of five more 5-way optical power splitters $3_{-2}\ldots\ldots3_2$ which form input ports to a fibre optic matrix network. The network has five 5-way optical power splitters (acting in this instance as combiners) $4_{-2}\ldots\ldots4_2$ which form the network output ports. Each input port is connected to every output port by individual lengths of optical fibre 5. The single optical output from each output port is coupled to a respective one of five photodetectors $6_{-2}\ldots\ldots6_2$ which provide r.f. outputs $0_{-2}\ldots\ldots0_2$. The lengths of the individual fibre optic links 5 are determined by the amount of time-delay weighting required in the matrix.

The design of filters from combinations of optical fibre delay with different amplitude weighting is known and these design techniques may be extended to the multiplexing filter described here.

In the case of Fig. 1 the splitter 2 and the fibre connections to the splitters $3_{-2}\ldots\ldots3_2$ perform the equivalent function of an optical fibre tapped delay line. Fig. 1 therefore shows an arrangement in which the incrementally delayed outputs from splitter 2 are coupled to a matrix network to form a multiplexing filter. Note that the increments are not necessarily uniform.

Consider first the output from the centre $0_0$ of the filter. This output is interconnected by fibre lengths to all the delay line taps. In practice these five line lengths inside the matrix network would be of equal length so that this single output would represent the normal response of the tapped filter delay line in the absence of a matrix network - the only change is an additional constant delay. Consider now the output $O_{+1}$, this port is again interconnected to all the tapping points, but in this case the fibres are not of equal length and they differ incrementally by a delay t, such that the longest additional delay goes to the last tap of the delay line. The effect of this is merely to produce an output in which the effective inter-tap delay has been increased from T to (T + t). This change in effective delay between taps modifies the frequency response. The output $O_{+2}$ has a similar set of differential time delays which result in modifying the delay between taps to (T + 2t). In the case of the outputs $O_{-1}$ and $O_{-2}$ the fibre links are cut so as to reduce the effective delay between taps to give the figures (T - t) and (T - 2t).

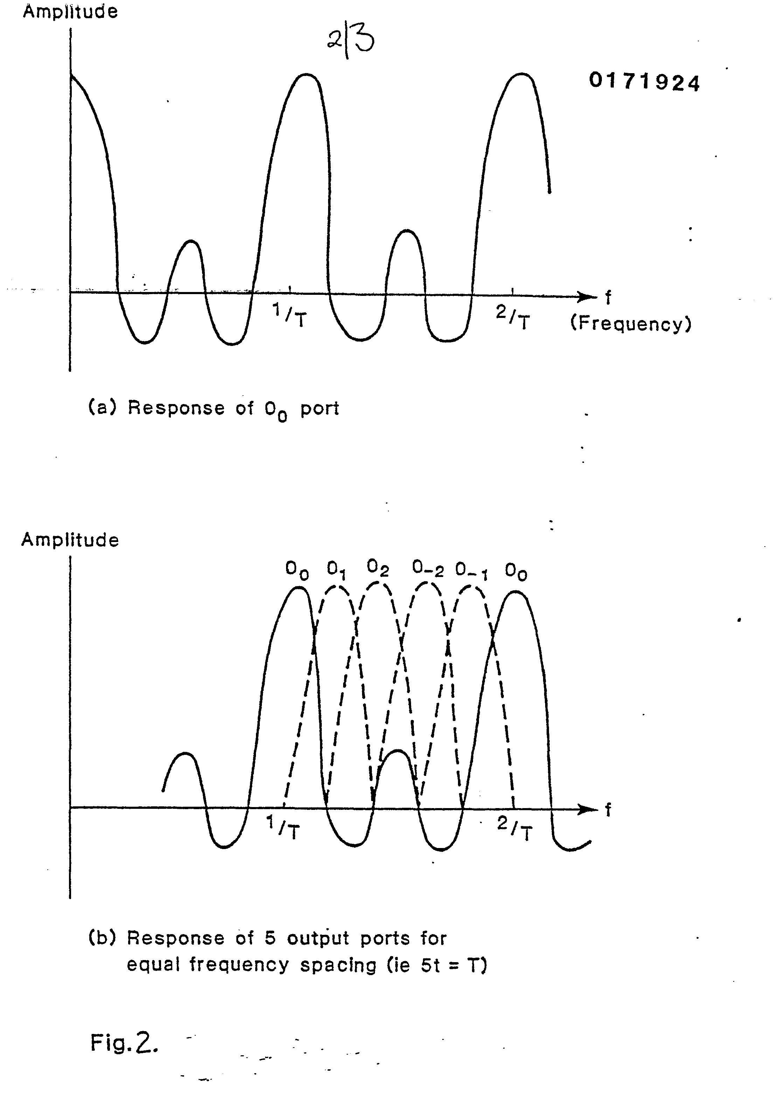

Figure 2a shows the predicted frequency response of the $O_O$ output of the above filter which is seen to be repetitive along the frequency scale at a rate of 1/T. The frequency responses of the other outputs would be identical functions but would be displaced along the frequency scale by amounts given by 1/t. If 5t = T then a set of five frequency responses is obtained which represents an orthogonal overlapping set and this is indicated in Figure 2b.

Although the above example is probably the simplest and most obvious set of frequency responses, for a five channel system, there is no fundamental reason why it is not possible to generate more than, or fewer than, 5 different responses from the output of a 5-tap delay line, though in such a case the outputs would not be orthogonal. For example, it is practicable to have only four outputs formed from five taps or, since the network is reversable, five outputs can be formed from 4 taps. Since such networks consist entirely of lengths of optical fibre, it is possible to specify by means of a matrix table, the element (delays) needed to specify the 5 x 5 port matrix. This is given in Table 1. This is presented in terms of time delays of fibre, where t is the incremental time delay and b represents a convenient constant value of delay which is then lengthened and shortened by the required increments.

Table 1

| Input Ports I | Output Ports O | | | | |
|---|---|---|---|---|---|
| | $O_1$ | $O_2$ | $O_3$ | $O_4$ | $O_5$ |
| $I_1$ | b+4t | b+2t | b | b-2t | b-4t |
| $I_2$ | b+2t | b+t | b | b-t | b-2t |
| $I_3$ | b | b | b | b | b |
| $I_4$ | b-2t | b-t | b | b+t | b+2t |
| $I_5$ | b-4t | b-2t | b | b+2t | b+4t |

It is perhaps then worth emphasising that since light is combining on an incoherent (power) basis a zero output from a given port corresponds to cancellation of the envelope modulation of the light at that port but it does not effect the average illumination of the photodetector. Clearly (excluding losses) all the light is uniformly divided between all the output photodetectors, it is only the modulation which changes.

Figure 1 can also be used to estimate the effective insertion loss of the network in order to calculate the signal-to-noise ratio (SNR). If each of the five-way power divider/combiners have an inherent loss (over and above the splitting loss), of L, then the total loss due to this factor will be 3L at each output port. In addition to this allowance must be made for the fact that the launched power has now been divided by the overall splitting loss (in this case 5) between the output ports so that the total insertion loss to any output port would be 5 + 3 L (neglecting any fibre loss). In the case of a generalised N-way split the figure would be 3L plus N.

Since 16-way optical dividers are currently available in multi-mode fibre, it is convenient to look at some parameters of a 16-way multiplexer for use as an ESM filter. Take as an example the need to perform some spectral analysis on a wide band signal of total bandwidth 3 GHz; this might well be centred at a similar frequency of 3 GHz. If the filter employed unity tap weights the 16 output bands would have a width of 187 MHz and the inter tap delay T would be 5.3 ns. The corresponding length of fibre for such an inter tap delay would be about 1 m and the longest run of fibre about 16 m. Within the matrix network the incremental length of fibre would be 1/16 m so that fibre loss would hardly be relevant for this type of system.

Despite the large input bandwidth of 3 GHz dispersion need have no significance over such short lengths of fibre. It is important to note that a typical ESM spectrum consists of a large number of different narrow band signals. Since the object is to filter these out separately, phase dispersion only matters if it is sufficiently severe to distort the individual narrow band signals. Normal limits on phase dispersion for wide band signals therefore do not apply.

A typical insertion loss and SNR for such a 16-way multiplexing filter is calculated as follows. It assumes a total fibre loss of 1 dB and an excess loss per coupler of 1 dB, giving a total insertion loss of 16 dB.

For a 16-way filter the optical signals pass through two cascaded 16-way power dividers and are combined at the photodetector by a 16-way power combiner. The overall insertion loss to a single output may be given by:

| | |
|---|---|
| 3 x excess loss per divider/combiner | 3 dB |
| 1 x splitting loss for 16 way divider | 12 dB |
| Fibre loss (say) | 1 dB |
| | 16 dB |

If the input bandwidth is 3GHz and this is split up into 16 channels, the bandwidth per channel will be 187 MHz. For an output SNR of 60 dB the required optical power/Hz is -118 dBW/Hz. Optical launched power required for above case given by -118 dBW + 83 dB 16 dB = -19 dBW (i.e. 12.6 mW launched power).

The output bandwidth of 187 MHz involves a maximum fibre run in the filter corresponding to a delay of 5.3ns and a maximum fibre length of 1m. Clearly the 1 dB allowance above for fibre loss should be more than adequate.

However, many ESM applications would require far more than 16 channel outputs. It is therefore interesting to examine the possibility of additional 16-way splitters and employing one of these at each output of the first multiplexing filter. This brings the output down to a total of 256 channels of individual bandwidth 11.7 MHz. The second filter necessarily has a different frequency response characteristic, and the various lengths of fibre are all increased by a factor of 16. Nevertheless, the maximum run of fibre is still less than 100 metres so that the complication and insertion loss is not too severe. The loss in this 256 way multiplexing filter is calculated as follows.

It is assumed here that a 256 way multiplexing filter is constructed from two cascaded 16-way filters. The calculations then follow those of the 16-way filter.

The insertion loss is given by:

| | |
|---|---|
| 6 x excess loss per divider/combiner | 6 dB |
| 2 x splitter loss for 16-way divider | 24 dB |
| Fibre loss | 1 dB |
| Total | 31 dB |

The launched power required is given by:

-118 dBW + 71 dB + 31 dB = -16 dBW

This will require a launch power of 25 mW of light into the filter for a desired output SNR of 60 dB and a bandwidth of 11.7 MHz. Since there would probably be some opportunity to relax the SNR requirement it would appear that the 256 way multiplexing filter could be constructable with present technology.

Various factors would effect the dynamic range of such a filter including the performance of the photodetectors at low level and the linearity of the modulation of the light source. For narrow band applications multiplexing filters could probably use LED sources but for modulation rates in the GHz region laser diodes would clearly be essential.

For unity weight filters the frequency response would have the maximum sidelobe level of -13 dB. Such a response is not too sensitive to amplitude and phase errors but it would be too desirable to cut fibre lengths to about $\lambda/10$ which in the above case would correspond to an accuracy of cutting fibre lengths to about 0.5cm. Again, the only concern is with the length at the modulation frequency. Amplitude errors could arise due to lack of uniformity in the power dividers and power combiners. In practice the most likely cause of a departure from uniformity would be the illumination of
the output fibre ports due to the polar pattern of the
input port within a power divider. This is likely to
give rise to a smooth illumination taper which could even
be used to reduce sidelobe levels. Multiple reflections
between the various junctions and couplers would need to .
be looked at since there would be no significant loss
within the fibres themselves.

Although the single stage 16-way multiplexing
filter is fairly straight forward, the need to produce 16
different filters in the second stage sounds less
attractive. It is therefore worth examining how the
second stage might possibly be simplified or reduced in
cost.

At first sight it would appear that the 16
filters used in the second stage of the spectral analysis
must all be different. They all take different input
bands (of total bandwidth 187 MHz) and sub-divide them
down to 16 bands of width 11.7 MHz. However, we must
remember that the frequency responses of such filters are
repetitive (as indicated in Figure 2). This means that
the same actual design of filter can be used for all the
16 filters in the second stage. In some instances, it
may also be possible to switch a single second stage
filter between the output ports of the first stage. This
opens the way for adaptive spectral analysis techniques.

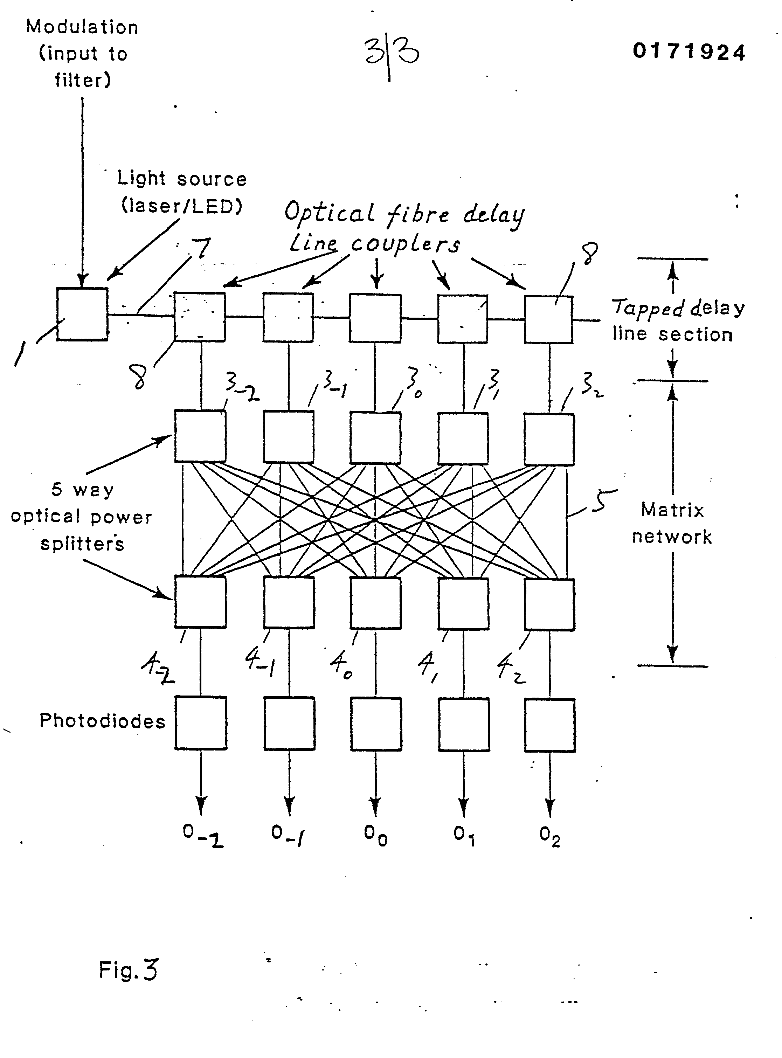

Fig. 3 shows the matrix network with the input
parts $3_{-2}$.....$3_2$ being fed by a conventional tapped
fibre optic delay line. The r.f. input is to a laser or
LED 1 which launches modulated light into a single
optical fibre 7. At intervals along the fibre there are
couplers 8 each of which couples out a portion of the
modulated light to a respective one of the input ports
$3_{-2}$....$3_2$.

Whilst the arrangements of Figs. 1 & 3 have been
described purely in terms of filtering signals in a
single input to give different outputs, it may be noted that the fibre-optic matrix and delays are inherently bi-directional in nature. Hence it would be possible to replace the photodetectors $6_{-2}.....6_2$ with lasers or LED's, and to put a single photodetector in place of the light source 1. Five separate inputs may then be combined with applied weighting to produce a single (multiplexed) output.

CLAIMS:-

1.      A radio frequency multiplexing filter comprising a matrix network of individual fibre optic delays connecting each of a number of input ports to each of a number of output ports, the input ports all being coupled to a common source of radio frequency modulated optical signals via incremental time delays, characterised in that said time delays are implemented by fibre optic delay means connected to a single modulated light source, said fibre optic delay means being adapted to provide substantially equal amplitude optical signals to each of the input ports but with incremental time delays between said optical signals applied to said ports.

2.      A filter according to claim 1 characterised in that said fibre optic delay means comprises a plurality of individual fibre optic delay lines of different lengths each coupled at one end to the light source and each connected at the other end to a respective one of the input ports.

3.      A filter according to claim 1 characterised in that said fibre optic delay means comprises a fibre optic tapped delay line.

4.      A filter according to claim 1, 2 or 3 characterised in that the output ports are each coupled to a respective photodetector.

5.      A filter arrangement including a first stage comprising a filter as claimed in claim 1, 2 or 3 and a second stage comprising a plurality of filters each as claimed in claim 1, 2 or 3, the input to each second stage filter being coupled to a respective output port of the first stage filter.

6.      A filter arrangement according to claim 5 wherein all the second stage filters are identical.

7.      A filter arrangement including a first stage comprising a filter as claimed in claim 1, 2 or 3 and a second stage comprising a filter as claimed in claim 1, 2 or 3 and means for switching the input to the second stage filter between the output ports of the first stage filter.

Fig. 1.

Amplitude

(a) Response of $O_0$ port

Amplitude

(b) Response of 5 output ports for
    equal frequency spacing (ie 5t = T)

Fig.2.

Modulation
(input to
filter)

Light source
(laser/LED)

*Optical fibre delay
line couplers*

*Tapped* delay
line section

7

8

8

1

$3_{-2}$  $3_{-1}$  $3_0$  $3_1$  $3_2$

5 way
optical power
splitters

5

Matrix
network

$4_{-2}$  $4_{-1}$  $4_0$  $4_1$  $4_2$

Photodiodes

$0_{-2}$  $0_{-1}$  $0_0$  $0_1$  $0_2$

Fig.3